# FASCICULE DE BREVET EUROPEEN

(11) **EP 4 142 262 B1**
(45) Date de publication et mention de la délivrance du brevet: **15.04.2026**
(21) Numéro de dépôt: 22192562.1
(22) Date de dépôt: 29.08.2022
(51) Int. Cl.: H04L 67/12, H04L 67/5651, H04L 67/00

(54) **PROCÉDÉ DE TRANSMISSION DE DONNÉES MÉTROLOGIQUES ET DISPOSITIF METTANT EN OEUVRE LE PROCÉDÉ**
VERFAHREN ZUR ÜBERTRAGUNG VON METROLOGISCHEN DATEN UND VORRICHTUNG ZUR UMSETZUNG DIESES VERFAHRENS
METHOD FOR TRANSMITTING METROLOGICAL DATA AND DEVICE IMPLEMENTING THE METHOD

(30) Priorité: 31.08.2021 FR 2109060
(43) Date de publication de la demande: 01.03.2023
(73) Titulaire: Sagemcom Energy & Telecom SAS, 92270 Bois-Colombes (FR)
(72) Inventeur: ROTER, Ziv, 92500 RUEIL MALMAISON (FR)
(74) Mandataire: Cabinet Le Guen Maillet

(56) Documents cités:
- JP-A- 2006 277 378
- US-A1- 2017 265 268
- US-A1- 2018 128 437

## Description

### DOMAINE TECHNIQUE

La présente invention se rapporte à la transmission de données entre un dispositif électronique de mesure et un serveur de collecte distant. L'invention concerne plus particulièrement un procédé de transmission de données depuis un compteur intelligent de consommation d'eau, de gaz, ou d'électricité et un serveur de collecte de telles données de consommation.

### ETAT DE LA TECHNIQUE ANTERIEURE

De nombreux objets connectés sont conçus et configurés pour communiquer entre eux et échanger des données dans le cadre d'applications diverses. Les systèmes de communications permettant à deux objets connectés de communiquer entre eux sont multiples. Il peut s'agir de systèmes selon un format dit « propriétaire » ou des systèmes utilisant des supports physiques et des protocoles normalisés, ou encore une combinaison des deux. Pour faciliter la communication entre des objets connectés via un ou plusieurs réseaux de communication, de nombreux protocoles sont définis, permettant notamment à un dispositif connecté recevant des données depuis un autre dispositif connecté, de pouvoir lire, interpréter et traiter ces données, le cas échéant. De nombreuses applications existent selon lesquelles des dispositifs de mesure sont configurés pour générer des données métrologiques et les transmettre ensuite à un ou plusieurs dispositifs distants de collecte de ces données, en vue d'un traitement. C'est le cas, par exemple, des dispositifs de type compteurs intelligents (ou *smartmeters*) qui sont prévus et configurés pour mesurer des grandeurs physiques telles que par exemple un débit de courant électrique (consommation électrique), un débit d'eau ou un débit de gaz (consommation de fluide), puis pour transmettre, à intervalles réguliers ou non, des données métrologiques représentatives de consommations, à un serveur de collecte. Ces données métrologiques, représentatives de consommations, sont transmises à un serveur de collecte en vue d'opérer plus tard, par exemple, des opérations d'analyse des besoins de consommation et des opérations de facturation. De tels compteurs intelligents peuvent être configurés selon des configurations multiples, notamment du fait de la variété d'offres commerciales et tarifaires susceptibles d'être proposées, ou encore du fait d'un changement d'abonnement à un service de fourniture d'électricité, d'eau, ou de gaz, par exemple, ou encore en fonction du type de dispositif de mesure utilisé. Dans certaines configurations, des dispositifs de mesure, tels que des compteurs de consommation intelligents, transmettent des données métrologiques à un serveur de collecte de façon spontanée, c'est-à-dire sans que le serveur de collecte n'ait eu à solliciter la réception de ces données. Une telle transmission de données est couramment nommée transmission en mode *« push »,* puisqu'il est considéré dans pareil cas que le dispositif de mesure « pousse » les données vers le serveur distant de collecte prévu pour les recevoir et les traiter, sans qu'aucune demande explicite ne doive être faite par le serveur de collecte.

Ce mode de transmission est opposé au mode dit « *pull* », où le serveur de collecte adresse, par exemple, une requête au dispositif de mesure en vue d'obtenir des données métrologiques, ou plus généralement, vient lire des données métrologiques qui y sont disponibles. Or, eu égard à la grande variété de configuration des dispositifs de mesure, par exemple de type compteur intelligent de consommation, le serveur de collecte opérant une réception des données ne peut connaître le format des données reçues qu'à l'aide d'un descriptif du format des données métrologiques transmises transmis préalablement aux données elles-mêmes. Un tel descriptif du format des données métrologiques utiles reçues est souvent instancié sous la forme de données additionnelles dites *métadonnées.* Ces métadonnées sont faites d'une suite d'informations représentatives du format de données métrologiques transmises et précèdent les données métrologiques utiles, lors d'une transmission entre un dispositif de mesure et un dispositif serveur de collecte. Ces métadonnées sont souvent codées selon des normes de référence, de sorte qu'en décodant les métadonnées, ou plus généralement en les lisant et en les interprétant, un dispositif serveur de collecte peut connaître le format des données métrologiques utiles qui vont suivre et par voie de conséquence, les lire dans un ordre connu, et les interpréter alors correctement, en vue d'un traitement ultérieur.

Cependant, de telles métadonnées utilisées comme descriptif du format des données métrologiques utiles sont souvent très nombreuses, si bien que le volume des métadonnées à transmettre est parfois plus conséquent voire bien plus conséquent que le volume des données métrologiques utiles, alors que la configuration d'un dispositif de mesure, et par conséquent le format des données métrologiques utiles ne change que peu souvent. Il en résulte une consommation inutile de bande passante sur le ou les réseaux de communication utilisés pour la transmission des données métrologiques, ce qui est préjudiciable à la performance des transmissions de données, notamment dans le cas de réseaux de communication potentiellement fréquemment perturbés, tels que des réseaux de communication par courants porteurs en ligne (CPL) ou des réseaux de communication radio, susceptibles d'être occasionnellement très bruités. La demande de brevet US2018/128437 A1 traite d'autotests et d'opérations de prévision de la durée de vie de systèmes d'éclairage de secours.

La situation peut être améliorée.

### EXPOSE DE L'INVENTION

L'invention a pour but d'améliorer l'efficacité d'une transmission de données de type *push* entre un dispositif de mesure tel qu'un compteur intelligent de consommation d'électricité, d'eau, ou de gaz, par exemple, et un dispositif serveur centralisé de collecte, en réduisant le nombre de données à transmettre, et en réalisant en conséquence une économie substantielle de bande passante sur le lien de transmission entre ces deux équipements.

A cet effet, l'invention a pour objet un procédé de transmission de données métrologiques, exécuté dans un dispositif de mesure configuré pour convertir une grandeur physique en données métrologiques, le procédé comprenant :
- détecter une modification de la configuration dudit dispositif de mesure, en rapport avec des données métrologiques à transmettre,
- déterminer une suite d'informations représentatives d'un format de transmission desdites données métrologiques à transmettre,
- déterminer un condensat desdites informations représentatives dudit format de transmission,
- émettre, vers un dispositif distant, ledit condensat puis lesdites données métrologiques à transmettre.

Le procédé selon l'invention peut également comporter les caractéristiques suivantes, considérées seules ou en combinaison :
- La grandeur physique mesurée est une consommation d'énergie électrique ou un débit d'un fluide (tel que de l'eau ou du gaz).
- La suite d'informations représentatives d'un format de transmission et les desdites données métrologiques à transmettre sont organisées selon un protocole ou un ensemble de protocoles DLMS/COSEM pour l'échange de données de comptage, ou l'une de ses évolutions.
- Le condensat est déterminé par une application d'une fonction de hachage de type SHA-256 à ladite suite d'informations représentatives d'un format de transmission.
L'invention a également pour objet un dispositif de mesure configuré pour convertir des grandeurs physiques en données métrologiques, le dispositif de mesure comprenant des circuits électroniques configurés pour :
- détecter une modification de la configuration dudit dispositif de mesure, en rapport avec des données métrologiques à transmettre,
- déterminer une suite d'informations représentatives d'un mode de transmission desdites données métrologiques à transmettre,
- déterminer un condensat desdites informations représentatives dudit mode de transmission,
- émettre, vers un dispositif distant, ledit condensat puis lesdites données métrologiques à transmettre.

Selon un mode de réalisation, le dispositif de mesure est d'un type parmi : compteur de consommation électrique, compteur de consommation d'eau, compteur de consommation de gaz.

L'invention a également pour objet un procédé de collecte de données métrologiques, exécuté dans un dispositif serveur de collecte de données métrologiques, le procédé de collecte comprenant :
- recevoir, depuis un dispositif de mesure, un condensat représentatif d'une suite d'informations représentatives d'un format de transmission de données métrologiques à recevoir,
- comparer successivement ledit condensat reçu à un ou plusieurs condensats précédemment reçus et mémorisés dans une mémoire dudit dispositif serveur de collecte, et,
- si le condensat reçu est identique à un condensat précédemment mémorisé, déterminer à partir d'informations associées, dans ladite mémoire, audit condensat mémorisé, un format de données à recevoir, et sinon,
- mémoriser le condensat dans ladite mémoire et obtenir depuis ledit dispositif de mesure, et mémoriser dans ladite mémoire, en association avec le condensat reçu, des informations représentatives d'un format de transmission de données métrologiques à recevoir et utilisées pour générer le condensat.

L'invention concerne en outre un procédé de transmission de données métrologiques, exécuté dans système de collecte de données métrologiques, entre un dispositif de mesure et un dispositif serveur de collecte, le procédé comprenant les étapes exécutées par le dispositif de mesure :
- détecter une modification de la configuration dudit dispositif de mesure, en rapport avec des données métrologiques à transmettre,
- déterminer une suite d'informations représentatives d'un format de transmission desdites données métrologiques à transmettre,
- déterminer un condensat desdites informations représentatives dudit format de transmission,
- émettre, vers le serveur de collecte, ledit condensat puis lesdites données métrologiques à transmettre,
le procédé comprenant en outre les étapes, exécutées par le dispositif serveur de collecte :
- recevoir, depuis le dispositif de mesure, un condensat représentatif d'une suite d'informations représentatives d'un format de transmission de données métrologiques à recevoir,
- comparer successivement ledit condensat reçu à un ou plusieurs condensats précédemment reçus et mémorisés dans une mémoire dudit dispositif serveur de collecte, et,
- si le condensat reçu est identique à un condensat précédemment mémorisé, déterminer à partir d'informations associées audit condensat mémorisé un format de données à recevoir, et sinon,
- mémoriser le condensat dans ladite mémoire, obtenir depuis ledit dispositif de mesure et mémoriser dans ladite mémoire, en association avec le condensat reçu, des informations représentatives d'un format de transmission de données métrologiques à recevoir ayant servi à générer le condensat.

L'invention concerne de plus un produit programme d'ordinateur comprenant des instructions de codes de programme pour exécuter les étapes de l'un des procédés précédemment décrits lorsque le programme est exécuté par un processeur, ainsi qu'un support de stockage d'informations comprenant un tel produit programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre un dispositif de mesure configuré pour transmettre des données métrologiques à un serveur de collecte, à travers un système de transmission, selon un mode de réalisation ;
[Fig. 2] est un ordinogramme illustrant des étapes d'un procédé de transmission de données métrologiques depuis le dispositif de mesure déjà représenté sur la Fig. 1 ;
[Fig. 3] illustre la préparation d'un message à émettre par le dispositif de mesure de la Fig. 1, comprenant des données métrologiques, selon un mode de réalisation ;
[Fig. 4] est un ordinogramme illustrant des étapes d'un procédé de réception de données métrologiques reçues par le dispositif serveur de collecte déjà représenté sur la Fig. 1 ;
[Fig. 5] est un diagramme de principe illustrant une architecture d'un dispositif de mesure configuré pour émettre des données métrologiques selon un mode de réalisation ; et,
[Fig. 6] est un diagramme de principe illustrant une architecture d'un dispositif serveur de collecte configuré pour émettre des données métrologiques selon un mode de réalisation.

### EXPOSE DETAILLE DE MODES DE REALISATION

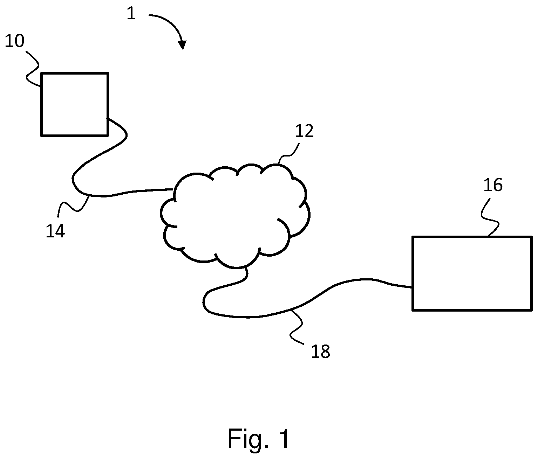

La **Fig. 1** illustre schématiquement un système 1 de collecte de données métrologiques. Le système 1 de collecte de données métrologiques comprend un dispositif de mesure 10. Le dispositif de mesure 10 est un compteur de consommation d' énergie électrique intelligent, encore communément appelé compteur électrique intelligent ou *smartmeter,* configuré pour opérer des mesures de consommation électrique. Selon l'exemple décrit, le dispositif de mesure 10 est un compteur électrique configuré pour mesurer à intervalles réguliers la consommation d'électricité d'un logement et pour transmettre, régulièrement vers un serveur de collecte, des données métrologiques représentatives de cette consommation, classifiées selon des critères prédéterminés. Par exemple, le dispositif de mesure 10 est configuré pour transmettre des données de consommation catégorisées selon un tarif diurne et des données de consommations catégorisées selon un tarif nocturne. Le système de collecte de données métrologiques comprend en outre une pluralité d'autres dispositifs de mesure similaires au dispositif de mesure 10, possiblement en très grand nombre. Ces derniers ne sont pas représentés sur la Fig. 1 pour des raisons de simplification de la description et dans la mesure où cela n'est pas utile à une bonne compréhension de l'invention décrite ici. Le système 1 de collecte de données métrologiques comprend également un dispositif de collecte 16, dit serveur de collecte, distant des dispositifs de mesure du système 1, et en particulier distant du dispositif de mesure 10. Le dispositif de mesure 10 comprend une interface de communication pour communiquer avec le dispositif serveur de collecte 16 via un réseau de communication 12. Le dispositif de mesure 10 est connecté au réseau de communication 12 via un lien filaire 14 et le dispositif serveur de collecte 16 est connecté au réseau de communication 12 via un lien filaire 18. Le dispositif serveur de collecte 16 comprend lui aussi une interface de communication pour sa connexion au réseau de communication 12. Selon un mode de réalisation de l'invention, le réseau de communication 12 est un réseau de communication par courants porteurs en ligne (dit réseau CPL), maillé, par exemple d'un type compatible avec un ensemble de supports physiques et de protocoles définis selon la norme G3-PLC (ITU-T G9903 2017). Bien évidemment, cet exemple de réseau de communication n'est pas limitatif, et l'invention peut s'appliquer en présence d'un autre type de réseau de communication utilisé entre le dispositif de mesure 10 et le dispositif serveur de collecte 16, tel que, par exemple un réseau radio cellulaire de type NB-IoT.

Le dispositif serveur de collecte 16 est configuré pour collecter des données métrologiques mesurées par tout ou partie des dispositifs de mesure qui lui sont attribués, en termes de gestion de données. Selon l'exemple décrit, le serveur de collecte 16 opère en tant que dispositif de collecte unique dans le système 1 de collecte de données métrologiques. Selon des variantes, d'autres serveurs de collecte, opérant des fonctions identiques, similaires ou complémentaires peuvent être utilisés.

Selon un mode de réalisation de l'invention, le dispositif de mesure 10 est configurable pour opérer de différentes façons en fonction des besoins de collecte et des applications requérant une collecte (suivi de consommation, analyse statistiques, facturation, par exemple). Par exemple, le dispositif de mesure 10 peut être configuré pour opérer des transmissions de données métrologiques en mode *push,* en mode *pull,* ou par combinaison de ces deux modes. Selon un autre exemple, le dispositif de mesure 10 peut être configuré pour opérer des transmissions de données métrologiques en mode *push* une fois par jour. Selon une variante, le dispositif de mesure 10 peut être configuré pour opérer une transmission de données métrologiques en mode *push* toutes les heures, par exemple dans un but de surveillance accrue de la consommation électrique d'une région en cas de températures excessivement basses, en période hivernale. Selon un autre exemple, le dispositif de mesure 10 peut être configuré pour transmettre toutes les heures, en mode *push,* vers le dispositif serveur de collecte 16, des données métrologiques représentatives de consommations électriques diurnes et pour ne transmettre qu'une fois tous les deux jours, toujours en mode *push,* et toujours vers le serveur de collecte 16, des données métrologiques représentatives de consommations électriques nocturnes. Ainsi, lorsque le dispositif de mesure 10 transmet des données métrologiques vers le dispositif serveur de collecte 16, le type et la forme des données métrologiques transmises varient en fonction de la configuration du dispositif de mesure 10. Selon un mode de réalisation, la configuration ou reconfiguration du dispositif de mesure 10 peut être opérée à distance, par exemple par une personne habilitée d'un service de fourniture d'énergie. Selon un mode de réalisation, le dispositif de mesure 10 peut en outre être configuré par un intervenant technique opérant sur site, et susceptible de prendre le contrôle du dispositif de mesure 10, localement, par exemple au moyen d'une console de programmation connectée au dispositif de mesure 10 par un lien filaire ou par un lien sans fil. Selon un mode de réalisation de l'invention, un descriptif du type et de la forme des données métrologiques transmises par le dispositif de mesure 10 est déterminé après une configuration initiale ou après chaque reconfiguration du dispositif de mesure 10, selon un protocole normalisé ou selon un protocole propriétaire. Le descriptif ainsi déterminé est nommé descriptif du format des données métrologiques à transmettre, dans la présente description. Ce descriptif comprend une suite d'informations représentatives du format des données métrologiques à transmettre. Cette suite d'informations est appelée métadonnées. Selon un mode de réalisation de l'invention, les métadonnées comprennent des champs d'informations indiquant la nature des données transmises et leur format au sens large. C'est-à-dire que lorsqu'une information est présente dans les données métrologiques, les métadonnées indiquent à un récepteur qui les interprète où trouver une donnée en particulier et quelle est sa forme (taille, position, type de codage, etc). Par exemple, des métadonnées peuvent être déterminées pour indiquer la présence de données métrologiques représentatives d'une mesure d'énergie active et la présence de données métrologiques représentatives d'une mesure d'énergie réactive. De façon similaire, les métadonnées peuvent indiquer que les données métrologiques comprennent des données relatives à une mesure d'énergie importée vers le logement ou encore une des données relatives à une mesure d'énergie produite dans le périmètre du logement (dans l'installation électrique du logement) et exportée ensuite vers le réseau de transport et de distribution d'énergie électrique. Toujours selon un principe similaire, les métadonnées peuvent comprendre des informations indiquant la présence de données représentatives d'une consommation selon un premier tarif, d'une consommation selon un second tarif, et l'absence de données représentatives de consommation selon un troisième tarif, cette option n'ayant pas été souscrite par le souscripteur de l'abonnement de fourniture d'électricité. Les métadonnées comprennent en outre des informations relatives à la localisation et à la taille des données utiles transmises dans l'ensemble des données (dans le bloc de données, ou dans un message transmis).

Ainsi les données métrologiques transmises depuis le dispositif de mesure 10 vers le serveur de collecte 16 sont dépendantes de la configuration du dispositif de mesure 10, et les métadonnées qui visent à décrire la structure et le format des données métrologiques transmises, pour un récepteur s'apprêtant à les recevoir ou à les lire, sont également dépendantes de la configuration du dispositif de mesure 10. Selon un mode de réalisation de l'invention, l'organisation des métadonnées et des données métrologiques est opérée par le dispositif de mesure 10 conformément à des protocoles définis selon la norme DLMS/COSEM (Bluebook V14). Le sigle DLMS est issu de l'anglais « *Device Language Message Specification »* qui signifie « spécification de langage de message de dispositif ». L'acronyme COSEM est issu de l'anglais « *Companion Specification for Energy Management* » et qui signifie « spécification d'accompagnement pour la gestion de l'énergie ». La norme DLMS/COSEM définit un ensemble de protocoles sur lequel s'appuient de nombreuses applications impliquant des compteurs intelligents multi-services utilisant des réseaux de type GPRS/UMTS/LTE et CPL, par exemple, pour transporter les données métrologiques en lien avec des applications variées. Les données transmises concernent plus largement des consommations d'énergie, des informations client, des opérations de commutations de charge, des mises à jour de micrologiciels embarqués dans les compteurs, de la gestion d'évènements, etc. Avantageusement, la mise à jour des métadonnées est opérée automatiquement dans le dispositif de mesure 10 pour donner suite à une détection de changement de configuration. Un changement de configuration est détecté par un module de contrôle, interne ou externe au dispositif de mesure 10, qui scrute les paramètres de configuration propres à ce dispositif de mesure.

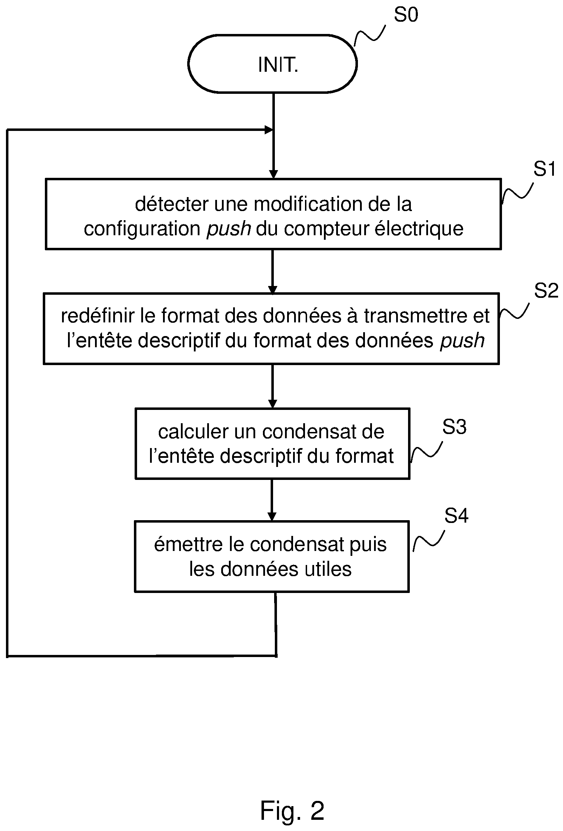

La **Fig. 2** illustre un procédé transmission de données métrologiques selon un mode de réalisation, exécuté dans le dispositif de mesure 10, et qui vise à remplacer astucieusement les métadonnées, souvent bien plus volumineuses que les données métrologiques utiles, par un condensat de ces métadonnées, de sorte à limiter la quantité de données à transmettre.

En effet, si les transmissions de données utiles sont fréquentes entre le dispositif de mesure 10 et le dispositif serveur de collecte 16, les modifications de configuration sont bien moins fréquentes. Selon un exemple, des données métrologiques sont transmises une fois par jour entre le dispositif de mesure 10 et le dispositif serveur de collecte 16, et un changement de configuration du dispositif de mesure 10 ne survient qu'une à deux fois dans le cours d'une année. Ainsi, vu du côté récepteur des données métrologiques, c'est-à-dire vu depuis le dispositif serveur de collecte 16, une information unique représentative de la configuration, ou en d'autres termes une information unique représentative du format et de l'organisation des données métrologiques peut suffire et il n'est alors pas utile de transmettre l'ensemble volumineux des métadonnées. Astucieusement, un condensat (ou « *hash* ») des métadonnées est déterminé (calculé) de sorte à être unique pour chaque variante de configuration possiblement utilisée. Le terme « condensat » désigne ici le résultat d'une fonction cryptographique (H) de hachage appliqué aux métadonnées et valant descriptif du format des données métrologiques à transmettre. Ainsi le condensat intervient astucieusement comme une empreinte numérique unique permettant d'identifier rapidement les données initiales au même titre qu'une signature permet d'identifier une personne. Le condensat déterminé représente une « clé » unique des métadonnées, sans jamais contenir leur enveloppe et permet ainsi à un récepteur du condensat de retrouver la configuration du dispositif de mesure émetteur, par exemple la configuration du dispositif de mesure 10 et donc l'organisation et le format des métadonnées qu'il transmet, et donc des données métrologiques qui sont reçues.

Un étape initiale **S0** correspond à une étape au terme de laquelle le dispositif de mesure 10 est complètement opérationnel, dispose de données métrologiques à transmettre au dispositif serveur de collecte distant 16, de métadonnées dépendantes notamment de la configuration de transmission du dispositif de mesure 10 et représentatives de l'organisation et du format des données métrologiques à transmettre, et est prêt à opérer une transmission de métadonnées et de données métrologiques vers le serveur de collecte distant 16.

Lors d'une étape **S1,** un module de supervision embarqué dans le dispositif de mesure 10, ou externe à celui-ci, détecte une modification de la configuration du dispositif de mesure 10, laquelle modification de configuration impacte le type et la forme des données à transmettre en mode *push* vers le serveur de collecte 16. Le format des données métrologiques à transmettre est donc redéfini lors d'une étape **S2** du fait de la reconfiguration récente, et un entête descriptif du format des données à transmettre en mode *push* est redéfini en conséquence. Cet entête n'est autre que l'ensemble des métadonnées, suite d'informations représentatives du format des données métrologiques utiles, à transmettre. Lors d'une étape **S3,** une détermination par calcul d'un condensat (hash) représentatif des métadonnées est opéré par une unité de contrôle du dispositif de mesure 10. Selon un mode de réalisation, une fonction de hachage de type SHA-256 est appliquée aux métadonnées. Selon des variantes, d'autres fonctions de hachage peuvent être utilisées, telles que, par exemple, une fonction MD4, une fonction MD5, une fonction SHA-1, toutes bien connues dans le domaine de la cryptographie ; ces exemples n'étant bien évidemment pas limitatifs. Après cela, le condensat qui résulte de l'opération cryptographique de hachage est transmis vers le dispositif serveur de collecte 16, suivi des données métrologiques utiles (des données de consommation électrique, par exemple).

Bien évidemment, les métadonnées peuvent comprendre un identifiant du dispositif de mesure 10. Un tel identifiant peut en outre être transmis en dehors des métadonnées, par exemple dans un entête indépendant des messages entre le dispositif de mesure 10 et le dispositif serveur de collecte 16.

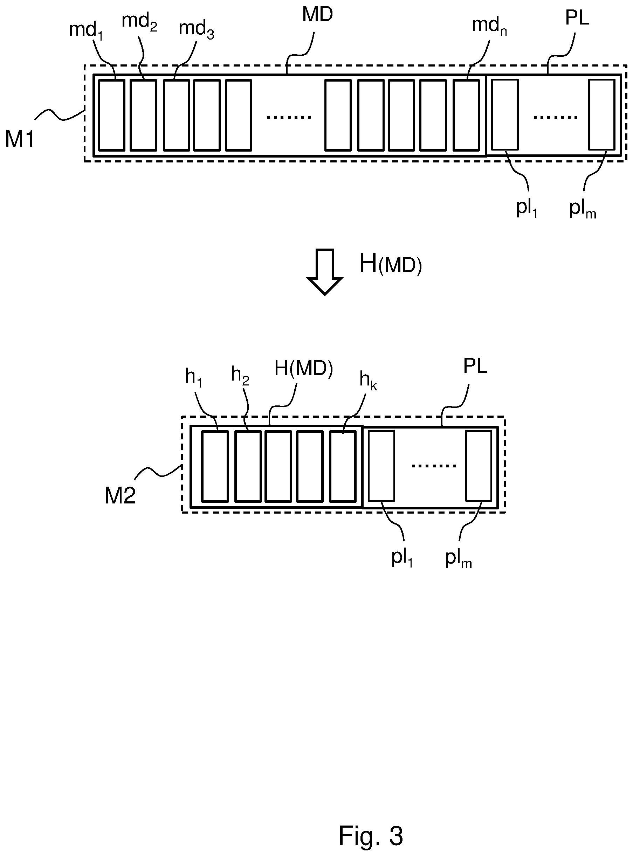

La partie supérieure de la **Fig. 3** illustre un message M1 comprenant un ensemble MD de métadonnées et un ensemble PL de données métrologiques utiles, tels que transmis selon l'art antérieur, et la partie inférieure de la Fig. 3 illustre un message M2 comprenant un condensat H(MD) de l'ensemble MD de métadonnées et comprenant l'ensemble PL de données métrologiques utiles. Comme le symbolise la Fig. 3, le message M2 est obtenu par application de la fonction de hachage H(MD) à partir du message M1. Avantageusement, et grâce à l'utilisation astucieuse d'un condensat H(MD) des métadonnées MD en lieu et place des métadonnées MD elles-mêmes, la longueur du message M2 est bien inférieure à la longueur du message M1. Avantageusement et grâce au remplacement astucieux des métadonnées MD par un condensat des métadonnées H(MD), un message M1 comprenant plus d'un millier d'octets peut être remplacé par un message M2 comprenant un peu plus d'une centaine d'octets. Le gain en termes de bande passante est donc substantiel. La Fig. 3 illustre en outre des détails de l'ensemble MD des métadonnées. L'ensemble comprend une suite md₁, md₂, md₃, ..., mdₙ de *n* métadonnées. De façon similaire, la Fig. 3 illustre que l'ensemble PL des données métrologiques utiles (encore appelé parfois « *payload* ») comprend une suite pl₁, pl₂, pl₃, ... plₘ de *m* données métrologiques utiles. Le détail de ces métadonnées et données n'est pas précisé ici dans la mesure où il ne participe pas à la compréhension de l'invention. Le condensat H(MD) de l'ensemble MD de métadonnées comprend une suite de données md₁, md₂, md₃, mdₖ, comprenant un nombre *k* de données de signature inférieur au nombre *n* de métadonnées. Selon un mode de réalisation, chacune des métadonnées md₁ à mdₙ, chacune des données métrologiques pl₁ à plₘ et chacune des données de signature (ou de données d'empreinte) hₗ à hₖ du condensat H(MD) prend la forme d'un octet.

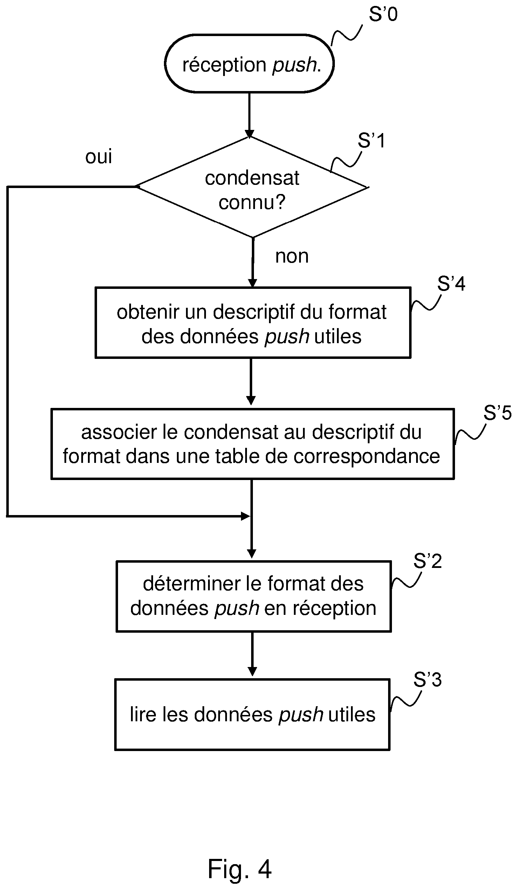

La **Fig. 4** illustre un procédé de réception de données métrologiques émises par le dispositif de mesure 10, exécuté dans le dispositif serveur de collecte 16, selon un mode de réalisation. Le dispositif de collecte 16 est prévu et configuré pour recevoir et stocker l'ensemble PL des données métrologiques transmis par le dispositif de mesure 10, ainsi que par de nombreux autres dispositifs de mesure connectés au réseau de communication 12 mais non représentés sur la Fig. 1. Selon l'exemple décrit, le dispositif serveur de collecte 16 est un dispositif distant prévu pour opérer une collecte de toutes les données mesurées par de nombreux dispositifs de mesure similaires au dispositif de mesure 10 et pour mettre ensuite ces données métrologiques à disposition de systèmes tiers en vue d'un ou plusieurs traitements ultérieurs. Par exemple, le dispositif serveur de collecte 16 peut être configuré pour assurer la collecte et la gestion des données métrologiques de tous les compteurs de consommation électrique intelligents d'une ville, d'une région ou d'un pays. Selon une variante, le dispositif de serveur de collecte 16 peut également opérer tout ou partie de traitements ultérieurs à effectuer (classement, analyse statistique, dépouillement, prédiction, facturation, etc.). Avantageusement, le dispositif serveur de collecte 16 comprend une mémoire non volatile prévue pour le stockage de condensats reçus dans une table de correspondances associant, pour chaque valeur de condensat H(MD) différente de chacune des autres valeurs de condensat précédemment reçues, un ensemble MD de métadonnées, de sorte que, pour une configuration donnée d'un dispositif de mesure déjà observée en réception par le dispositif serveur de collecte 16, une correspondance condensat - ensemble de métadonnées existe dans la table de correspondance du dispositif serveur de collecte 16. Une étape **S'0** correspond à une étape initiale au terme de laquelle le dispositif serveur de collecte 16 est normalement opérationnel est prêt à recevoir, et reçoit, un message de type *push* émis par le dispositif de mesure 10 ou depuis un dispositif similaire du système 1 de collecte, lequel message comprend un condensat H(MD) d'un ensemble MD de métadonnées suivi d'un ensemble PL de données métrologiques utiles. Lors d'une étape **S'1,** le dispositif serveur de collecte 16 compare le condensat H(MD) reçu avec, successivement, chacun des condensats déjà reçus et présents dans sa table de correspondance interne. Si la comparaison permet de déterminer que le condensat reçu est déjà connu du dispositif serveur de collecte 16 (soit, en d'autres termes, déjà présent dans sa table de correspondance) alors le serveur de collecte 16 lit l'ensemble MD de métadonnées associées au condensat H(MD) dans sa table interne de correspondance, lors d'une étape **S'2,** et peut lire intelligiblement les données utiles qui lui ont été transmises à la suite du condensat H(MD) lors d'une étape **S'3.** Si, à l'opposé, le condensat H(MD) reçu à l'étape S'0 n'est pas identifié dans la table de correspondance interne du dispositif serveur de collecte 16, lors de l'étape de comparaison S'1, alors le dispositif serveur de collecte 16 sollicite l'obtention d'un message comprenant l'ensemble MD de métadonnées en correspondance du condensat H(MD) récemment reçu et obtient cet ensemble MD du dispositif de mesure 10 lors d'une étape **S'4.** Selon un mode de réalisation, le dispositif serveur de collecte 16 sollicite l'obtention de l'ensemble MD de métadonnées en correspondance du condensat H(MD) selon un échange protocolaire prédéfini, par exemple une requête dédiée, et par la réception subséquente d'une réponse à cette requête. Selon une variante du mode de réalisation, l'ensemble MD peut être adressé au dispositif serveur de collecte 16 lors de l'émission d'un nouveau message depuis le dispositif de mesure 10, lequel nouveau message comprend à la fois le condensat H(MD) et l'ensemble de métadonnées MD ainsi éventuellement que les données métrologiques utiles, en l'absence d'émission d'un accusé de réception émis par le dispositif serveur de collecte 16 dans un délai imparti faisant suite à la transmission initiale. Dès lors que le dispositif serveur de collecte 16 a pu obtenir le descriptif du format des données push utiles, à savoir les métadonnées correspondantes au condensat qui n'avait pas encore été enregistré dans sa table de correspondance, il enregistre et associe le condensat H(MD) à l'ensemble MD de métadonnées dans sa table de correspondance interne, puis détermine lors de l'étape S'2 le format des données à lire à partir des métadonnées reçues lors de l'étape S'4 et opère alors, lors de l'étape **S'3,** une lecture structurée des données métrologiques utiles récemment reçues.

Il est à noter que lors d'une transmission de données métrologiques entre le dispositif de mesure 10 et le dispositif serveur de collecte 16, les procédés respectivement décrits en rapport avec la Fig. 2, exécuté, pour l'un, dans le dispositif de mesure 10, et en rapport avec la Fig. 4, exécuté, pour l'autre, dans le dispositif serveur de collecte 16, sont exécutés successivement et correspondent à des opérations d'émission suivies d'opération de réception. En ce sens, les procédés précités constituent un procédé de transmission de données métrologiques exécuté dans le système 1 de transmission de données métrologiques et comprenant:
- détecter, une modification de la configuration du dispositif de mesure 10, en rapport avec des données métrologiques PL à transmettre vers le dispositif serveur de collecte 16,
- déterminer des métadonnées MD sous forme d'une suite d'informations représentatives d'un format de transmission des données métrologiques PL à transmettre,
- déterminer un condensat H(MD) desdites informations MD représentatives du format de transmission en rapport avec la configuration du dispositif de mesure 10,
- émettre, vers le dispositif serveur de collecte 16, le condensat H(MD) puis les données métrologiques PL,
- recevoir par le dispositif serveur de collecte 16, depuis le dispositif de mesure 10, le condensat H(MD) représentatif de la suite d'informations représentatives du format de transmission de données métrologiques PL,
- comparer successivement ledit condensat H(MD) reçu à un ou plusieurs condensats précédemment reçus et mémorisés dans une mémoire du dispositif serveur de collecte 16, et,
- si le condensat H(MD) reçu est identique à un condensat précédemment mémorisé, déterminer à partir d'informations MD associées audit condensat mémorisé un format de données à recevoir, et sinon,
- mémoriser le condensat H (MD) dans la mémoire du dispositif serveur de collecte 16, obtenir depuis dispositif de mesure 10 et mémoriser dans la mémoire, en association avec le condensat H(MD) reçu, des informations MD représentatives du format de transmission de données métrologiques PL ayant servi à générer le condensat H(MD).

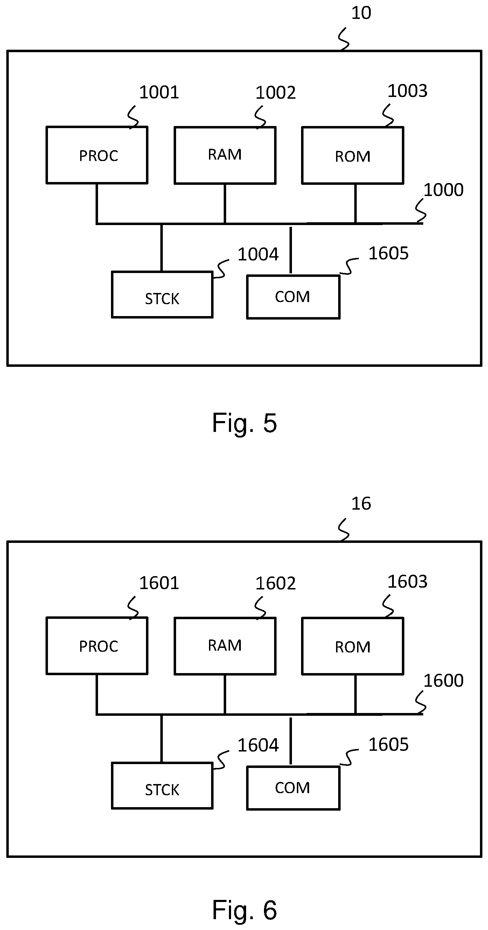

La **Fig. 5** illustre schématiquement un exemple d'architecture interne du dispositif de mesure 10. Considérons à titre illustratif que la Fig. 5 illustre un agencement interne du dispositif de mesure 10. Selon l'exemple d'architecture matérielle représenté à la Fig. 5, le dispositif de mesure 10 comprend alors, reliés par un bus de communication 1000 : un processeur ou CPU (« Central Processing Unit » en anglais) 1001 ; une mémoire vive RAM (« Random Access Memory » en anglais) 1002 ; une mémoire morte ROM (« Read Only Memory » en anglais) 1003 ; une unité de stockage telle qu'un disque dur (ou un lecteur de support de stockage, tel qu'un lecteur de cartes SD (« Secure Digital » en anglais) 1004 ; au moins une interface de communication 1005 permettant au dispositif de mesure 10 de communiquer avec d'autres dispositifs présents dans le réseau de communication 12, tels que d'autres dispositifs de mesure opérant des fonctions de relais de communication, par exemple, ou plus largement des dispositifs de communication par réseau de communication.

Le processeur 1001 est capable d'exécuter des instructions chargées dans la RAM 1002 à partir de la ROM 1003, d'une mémoire externe (non représentée), d'un support de stockage (tel qu'une carte SD), ou d'un réseau de communication. Lorsque le dispositif de mesure 10 est mis sous tension, le processeur 1001 est capable de lire de la RAM 1002 des instructions et de les exécuter. Ces instructions forment un programme d'ordinateur causant la mise en œuvre, par le processeur 1001, de tout ou partie d'un procédé décrit en relation avec la Fig. 2 ou des variantes décrites de ce procédé.

Tout ou partie des procédés décrits en relation avec la Fig. 2 ou leurs variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif de mesure 10 comprend de la circuiterie électronique configurée pour mettre en œuvre les procédés décrits en relation avec le dispositif de mesure 10. Bien évidemment, le dispositif de mesure 10 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus. Cette liste étant non exhaustive.

La **Fig. 6** illustre schématiquement un exemple d'architecture interne du dispositif serveur de collecte 16. Considérons à titre illustratif que la Fig. 6 illustre un agencement interne du dispositif serveur de collecte 16. Selon l'exemple d'architecture matérielle représenté à la Fig. 6, le dispositif de serveur de collecte 16 comprend alors, reliés par un bus de communication 1600 : un processeur ou CPU (« Central Processing Unit » en anglais) 1601 ; une mémoire vive RAM (« Random Access Memory » en anglais) 1602 ; une mémoire morte ROM (« Read Only Memory » en anglais) 1603 ; une unité de stockage telle qu'un disque dur (ou un lecteur de support de stockage, tel qu'un lecteur de cartes SD (« Secure Digital » en anglais) 1604 ; au moins une interface de communication 1605 permettant au dispositif serveur de collecte 16 de communiquer avec d'autres dispositifs présents dans le réseau de communication 12, tels que d'autres dispositifs de mesure opérant des fonctions de relais de communication, par exemple, ou plus largement des dispositifs de communication par réseau de communication.

Le processeur 1601 est capable d'exécuter des instructions chargées dans la RAM 1602 à partir de la ROM 1603, d'une mémoire externe (non représentée), d'un support de stockage (tel qu'une carte SD), ou d'un réseau de communication. Lorsque le dispositif serveur de collecte 16 est mis sous tension, le processeur 1601 est capable de lire de la RAM 1602 des instructions et de les exécuter. Ces instructions forment un programme d' ordinateur causant la mise en œuvre, par le processeur 1601, de tout ou partie d'un procédé décrit en relation avec la Fig. 4 ou des variantes décrites de ce procédé.

Tout ou partie des procédés décrits en relation avec la Fig. 4 ou leurs variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif serveur de collecte 16 comprend de la circuiterie électronique configurée pour mettre en œuvre les procédés décrits en relation avec le dispositif serveur de collecte 16. Bien évidemment, le dispositif serveur de collecte 16 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus. Cette liste étant non exhaustive.

L'invention ne se limite pas aux seuls modes de réalisation et exemples décrits mais concerne plus largement tout procédé de transmission de données entre un dispositif de mesure fournissant des données métrologiques et un dispositif de collecte de ces données dans lequel des métadonnées destinées à indiquer au dispositif de collecte le format des données utiles sont remplacées par un condensat de ces métadonnées avant transmission, ainsi qu'un dispositif configuré pour exécuter un tel procédé.

## Revendications

1. Procédé de transmission de données métrologiques, exécuté dans un dispositif de mesure configuré pour convertir une grandeur physique en données métrologiques, le procédé comprenant :
- détecter une modification (S1) de la configuration dudit dispositif de mesure, en rapport avec des données métrologiques à transmettre,
- déterminer une suite d'informations (S2) représentatives d'un format de transmission desdites données métrologiques à transmettre,
- déterminer un condensat desdites informations (S3) représentatives dudit format de transmission,
- émettre, vers un dispositif distant, ledit condensat (S4) puis lesdites données métrologiques à transmettre.

2. Procédé de transmission selon la revendication précédente, dans lequel la grandeur physique est une consommation électrique ou un débit d'un fluide.

3. Procédé de transmission de données métrologiques selon la revendication 1 ou 2, dans lequel ladite suite d'informations représentatives d'un format de transmission et les desdites données métrologiques à transmettre sont organisées selon un protocole ou un ensemble de protocoles DLMS/COSEM pour l'échange de données de comptage, ou l'une de ses évolutions.

4. Procédé de transmission selon l'une quelconque des revendications 1 à 3, dans lequel ledit condensat est déterminé par une application d'une fonction de hachage de type SHA-256 à ladite suite d'informations représentatives d'un format de transmission.

5. Dispositif de mesure configuré pour convertir des grandeurs physiques en données métrologiques, le dispositif comprenant des circuits électroniques configurés pour:
- détecter une modification (S1) de la configuration dudit dispositif de mesure, en rapport avec des données métrologiques à transmettre,
- déterminer une suite d'informations (S2) représentatives d'un mode de transmission desdites données métrologiques à transmettre,
- déterminer un condensat desdites informations (S3) représentatives dudit mode de transmission,
- émettre, vers un dispositif distant, ledit condensat (S4) puis lesdites données métrologiques à transmettre.

6. Dispositif de mesure configuré selon la revendication précédente, le dispositif étant d'un type parmi : compteur de consommation électrique, compteur de consommation d'eau, compteur de consommation de gaz.

7. Procédé de collecte de données métrologiques, exécuté dans un dispositif serveur de collecte de données métrologiques, le procédé comprenant :
- recevoir, depuis un dispositif de mesure, un condensat représentatif d'une suite d'informations représentatives d'un format de transmission de données métrologiques à recevoir,
- comparer successivement ledit condensat reçu à un ou plusieurs condensats précédemment reçus et mémorisés dans une mémoire dudit dispositif serveur de collecte, et,
- si le condensat reçu est identique à un condensat précédemment mémorisé, déterminer à partir d'informations associées, dans ladite mémoire, audit condensat mémorisé, un format de données à recevoir, et sinon,
- mémoriser le condensat dans ladite mémoire et obtenir depuis ledit dispositif de mesure, et mémoriser dans ladite mémoire, en association avec le condensat reçu, des informations représentatives d'un format de transmission de données métrologiques à recevoir et utilisées pour générer le condensat.

8. Procédé de transmission de données métrologiques, exécuté dans système de collecte de données métrologiques, entre un dispositif de mesure et un dispositif serveur de collecte, le procédé comprenant les étapes exécutées par le dispositif de mesure :
- détecter une modification de la configuration dudit dispositif de mesure, en rapport avec des données métrologiques à transmettre,
- déterminer une suite d'informations représentatives d'un format de transmission desdites données métrologiques à transmettre,
- déterminer un condensat desdites informations représentatives dudit format de transmission,
- émettre, vers le serveur de collecte, ledit condensat puis lesdites données métrologiques à transmettre,
le procédé comprenant en outre les étapes, exécutées par le serveur de collecte :
- recevoir, depuis le dispositif de mesure, un condensat représentatif d'une suite d'informations représentatives d'un format de transmission de données métrologiques à recevoir,
- comparer successivement ledit condensat reçu à un ou plusieurs condensats précédemment reçus et mémorisés dans une mémoire dudit dispositif serveur de collecte, et,
- si le condensat reçu est identique à un condensat précédemment mémorisé, déterminer à partir d'informations associées audit condensat mémorisé un format de données à recevoir, et sinon,
- mémoriser le condensat dans ladite mémoire, obtenir depuis ledit dispositif de mesure et mémoriser dans ladite mémoire, en association avec le condensat reçu, des informations représentatives d'un format de transmission de données métrologiques à recevoir ayant servi à générer le condensat.

9. Produit programme d'ordinateur **caractérisé en ce qu'**il comprend des instructions de codes de programme pour exécuter les étapes du procédé selon l'une quelconque des revendications 1 à 5, lorsque ledit programme est exécuté par un processeur.

10. Support de stockage d'informations comprenant un produit programme d'ordinateur selon la revendication précédente.

## Patentansprüche

1. Verfahren zur Übertragung von Metrologiedaten, das in einer Messvorrichtung ausgeführt wird, die dazu ausgebildet ist, eine physikalische Größe in Metrologiedaten umzuwandeln, wobei das Verfahren Folgendes umfasst:
- Detektieren einer Veränderung (S1) der Konfiguration der Messvorrichtung in Zusammenhang mit zu übertragenden Metrologiedaten,
- Bestimmen einer Folge von Informationen (S2), die für ein Übertragungsformat der zu übertragenden Metrologiedaten repräsentativ sind,
- Bestimmen eines Kondensats der Informationen (S3), die für das Übertragungsformat repräsentativ sind,
- Senden des Kondensats (S4) und dann der zu übertragenden Metrologiedaten an eine entfernte Vorrichtung.

2. Übertragungsverfahren nach dem vorhergehenden Anspruch, wobei die physikalische Größe ein Stromverbrauch oder ein Durchsatz eines Fluids ist.

3. Verfahren zur Übertragung von Metrologiedaten nach Anspruch 1 oder 2, wobei die Folge von Informationen, die für ein Übertragungsformat und die der zu übertragenden Metrologiedaten repräsentativ sind, nach einem DLMS/COSEM-Protokoll oder -Protokollsatz für den Austausch von Zähldaten oder einer seiner Fortentwicklungen organisiert sind.

4. Übertragungsverfahren nach einem der Ansprüche 1 bis 3, wobei das Kondensat durch eine Anwendung einer Hash-Funktion vom Typ SHA-256 auf die Folge von Informationen, die für ein Übertragungsformat repräsentativ sind, bestimmt wird.

5. Messvorrichtung, die dazu ausgebildet ist, physikalische Größen in Metrologiedaten umzuwandeln, wobei die Vorrichtung elektronische Schaltungen umfasst, die für Folgendes ausgebildet sind:
- Detektieren einer Veränderung (S1) der Konfiguration der Messvorrichtung in Zusammenhang mit zu übertragenden Metrologiedaten,
- Bestimmen einer Folge von Informationen (S2), die für eine Übertragungsart der zu übertragenden Metrologiedaten repräsentativ sind,
- Bestimmen eines Kondensats der Informationen (S3), die für die Übertragungsart repräsentativ sind,
- Senden des Kondensats (S4) und dann der zu übertragenden Metrologiedaten an eine entfernte Vorrichtung.

6. Messvorrichtung, die nach dem vorhergehenden Anspruch ausgebildet ist, wobei die Vorrichtung von einer der folgenden Arten ist: Stromverbrauchzähler, Wasserverbrauchzähler, Gasverbrauchzähler.

7. Verfahren zur Sammlung von Metrologiedaten, das in einer Servervorrichtung zur Sammlung von Metrologiedaten ausgeführt wird, wobei das Verfahren Folgendes umfasst:
- Empfangen eines Kondensats von einer Messvorrichtung, das für eine Folge von Informationen repräsentativ ist, die für ein Übertragungsformat zu empfangender Metrologiedaten repräsentativ sind,
- Vergleichen des empfangenen Kondensats nacheinander mit einem oder mehreren Kondensaten, die zuvor empfangen und in einem Speicher der Sammelserver-Vorrichtung gespeichert wurden, und,
- wenn das empfangene Kondensat mit einem zuvor gespeicherten Kondensat identisch ist, Bestimmen eines Formats zu empfangender Daten anhand von Informationen, die im Speicher dem gespeicherten Kondensat zugeordnet sind, und anderenfalls
- Speichern des Kondensats in dem Speicher und Erhalten von der Messvorrichtung, und Speichern in dem Speicher in Verbindung mit dem empfangenen Kondensat, von Informationen, die für ein Übertragungsformat zu empfangender Metrologiedaten repräsentativ sind und zur Erzeugung des Kondensats verwendet werden.

8. Verfahren zur Übertragung von Metrologiedaten zwischen einer Messvorrichtung und einer Sammelserver-Vorrichtung, das in System zur Sammlung von Metrologiedaten ausgeführt wird, wobei das Verfahren die Schritte umfasst, die von der Messvorrichtung ausgeführt werden:
- Detektieren einer Veränderung der Konfiguration der Messvorrichtung in Zusammenhang mit zu übertragenden Metrologiedaten,
- Bestimmen einer Folge von Informationen, die für ein Übertragungsformat der zu übertragenden Metrologiedaten repräsentativ sind,
- Bestimmen eines Kondensats der Informationen, die für das Übertragungsformat repräsentativ sind,
- Senden des Kondensats und dann der zu übertragenden Metrologiedaten an den Sammelserver,
wobei das Verfahren ferner die Schritte umfasst, die vom Sammelserver ausgeführt werden:
- Empfangen eines Kondensats von der Messvorrichtung, das für eine Folge von Informationen repräsentativ ist, die für ein Übertragungsformat zu empfangender Metrologiedaten repräsentativ sind,
- Vergleichen des empfangenen Kondensats nacheinander mit einem oder mehreren Kondensaten, die zuvor empfangen und in einem Speicher der Sammelserver-Vorrichtung gespeichert wurden, und,
- wenn das empfangene Kondensat mit einem zuvor gespeicherten Kondensat identisch ist, Bestimmen eines Formats zu empfangender Daten anhand von Informationen, die dem gespeicherten Kondensat zugeordnet sind, und anderenfalls
- Speichern des Kondensats in dem Speicher, Erhalten von der Messvorrichtung und Speichern in dem Speicher, in Verbindung mit dem empfangenen Kondensat, von Informationen, die für ein Übertragungsformat zu empfangender Metrologiedaten repräsentativ sind, die der Erzeugung des Kondensats gedient haben.

9. Computerprogrammprodukt, **dadurch gekennzeichnet, dass** es Programmcode-Anweisungen zur Ausführung der Schritte des Verfahrens nach einem der Ansprüche 1 bis 5 bei Ausführung des Programm durch einen Prozessor umfasst.

10. Informationsspeichermedium umfassend ein Computerprogrammprodukt nach dem vorhergehenden Anspruch.

## Claims

1. Method for transmitting metrological data, implemented in a measuring device configured for converting a physical quantity into metrological data, the method comprising:
- detecting a modification (S1) of the configuration of said measuring device, in relation to metrological data to be transmitted,
- determining a series of information (S2) representing a transmission format of said metrological data to be transmitted,
- determining a condensate of said information (S3) representing said transmission format,
- sending, to a remote device, said condensate (S4) and then said metrological data to be transmitted.

2. Transmission method according to the preceding claim, wherein the physical quantity is an electrical consumption or a flow of a fluid.

3. Method for transmitting metrological data according to claim 1 or 2, wherein said series of information representing a transmission format and said metrological data to be transmitted are organised according to a protocol or a set of DLMS/COSEM protocols for exchanging metering data, or one of the developments thereof.

4. Transmission method according to any one of claims 1 to 3, wherein said condensate is determined by applying a hash function of the SHA-256 type to said series of information representing a transmission format.

5. Measuring device configured for converting physical quantities into metrological data, the device comprising electronic circuits configured for:
- detecting a modification (S1) of the configuration of said measuring device, in relation to metrological data to be transmitted,
- determining a series of information (S2) representing a transmission mode of said metrological data to be transmitted,
- determining a condensate of said information (S3) representing said transmission mode,
- sending, to a remote device, said condensate (S4) and then said metrological data to be transmitted.

6. Measuring device configured according to the preceding claim, the device being of the type from: electricity consumption meter, water consumption meter, gas consumption meter.

7. Method for collecting metrological data, implemented in a server device for collecting metrological data, the method comprising:
- receiving, from a measuring device, a condensate representing a series of information representing a transmission format for metrological data to be received,
- successively comparing said condensate received with one or more condensates previously received and stored in a memory of said collecting server device, and
- if the condensate received is identical to a condensate previously stored, determining, from information associated, in said memory, with said condensate stored, a format for data to be received, and otherwise,
- storing the condensate in said memory and obtaining, from said measuring device, and storing in said memory, in association with the condensate received, information representing a transmission format for metrological data to be received and used for generating the condensate.

8. Method for transmitting metrological data, implemented in a system for collecting metrological data, between a measuring device and a collecting server device, the method comprising the steps performed by the measuring device:
- detecting a modification of the configuration of said measuring device, in relation to metrological data to be transmitted,
- determining a series of information representing a transmission format of said metrological data to be transmitted,
- determining a condensate of said information representing said transmission mode,
- sending, to a remote device, said condensate and then said metrological data to be transmitted,
the method furthermore comprising the steps, performed by the collecting server device:
- receiving, from the measuring device, a condensate representing a series of information representing a transmission format for metrological data to be received,
- successively comparing said condensate received with one or more condensates previously received and stored in a memory of said collecting server device, and
- if the condensate received is identical to a condensate previously stored, determining, from information associated with said condensate stored, a format for data to be received, and otherwise,
- storing the condensate in said memory, obtaining, from said measuring device, and storing in said memory, in association with the condensate received, information representing a transmission format for metrological data to be received and used for generating the condensate.

9. Computer program product, **characterised in that** it comprises program code instructions for performing the steps of the method according to any one of claims 1 to 5, when said program is executed by a processor.

10. Information storage medium comprising a computer program product according to the preceding claim.
